# EUROPÄISCHE PATENTSCHRIFT

(11) **EP 2 577 553 B1**
(45) Veröffentlichungstag und Bekanntmachung des Hinweises auf die Patenterteilung: **01.10.2014**
(21) Anmeldenummer: 11754859.4
(22) Anmeldetag: 30.08.2011
(51) Int. Cl.: G06K 1/12, C03C 23/00

(54) **VERFAHREN UND VORRICHTUNG ZUM MARKIEREN VON GLAS**
METHOD AND DEVICE FOR MARKING GLASS
PROCÉDÉ ET DISPOSITIF DE MARQUAGE DE VERRE

(30) Priorität: 02.09.2010 DE 102010037273
(43) Veröffentlichungstag der Anmeldung: 10.04.2013
(73) Patentinhaber: Schott AG, 55122 Mainz (DE)
(72) Erfinder: WITZMANN, André, 95679 Waldershof (DE); TRINKS, Ulla, 95666 Mitterteich (DE)
(74) Vertreter: 2K Patentanwälte Blasberg Kewitz & Reichel
(86) Internationale Anmeldenummer: PCT/EP2011/064901
(87) Internationale Veröffentlichungsnummer: WO 2012/028611

(56) Entgegenhaltungen:
- WO-A1-2004/000749
- WO-A1-2009/128893

## Beschreibung

Die vorliegende Anmeldung beansprucht die Priorität der Deutschen Patentanmeldung Nr. 10 2010 037 273.0-45, angemeldet am 20. September 2010 mit dem Titel "Verfahren und Vorrichtung zum Markieren von Glas", deren Inhalt hiermit im Wege der Bezugnahme ausdrücklich mit beinhaltet sei.

### GEBIET DER ERFINDUNG

Die vorliegende Erfindung betrifft ein Verfahren und eine Vorrichtung zum Markieren bzw. Beschreiben von Glas gemäß dem Oberbegriff von Anspruch 1 bzw. 10

### HINTERGRUND DER ERFINDUNG

Ein zuverlässiges Markieren bzw. Beschreiben von Glas bzw. Glasprodukten gewinnt zunehmend an Bedeutung, z.B. zum Markieren von Glaschargen oder Produkten aus Glas, beispielsweise zu Nachverfolgungszwecken. Dabei kann insbesondere auch eine Fälschungssicherheit von Markierungen in oder auf Glas erwünscht sein, um eine Originalqualität zu gewährleisten, beispielsweise bei Primärpackmitteln aus Glas, beispielsweise in Form von Ampullen aus Glas für die Pharmaindustrie.

In jüngster Zeit wird zum Markieren oder Beschreiben von Glas zunehmend Laserstrahlung eingesetzt. Derartige Verfahren sind sehr übersichtlich in der Beschreibungseinleitung der deutschen Patentanmeldung DE 102 34 002 A1 der Anmelderin beschrieben, deren Inhalt hiermit ausdrücklich im Wege der Bezugnahme zu Offenbarungszwecken mit beinhaltet sei. Derartige Verfahren bedingen jedoch häufig Spezialvorkehrungen, die typischerweise aufwändig sind.

Das deutsche Patent DE 101 22 335 C1 (entsprechend der US-Patentanmeldung US 2003/0029849 A1) der Anmelderin offenbart ein Verfahren und eine Vorrichtung zum Markieren von Glas mit einem Laser, bei dem durch thermische Beeinflussung der zu markierenden Oberfläche des Glases eine Markierung auf die Oberfläche des Glases aufgebracht wird. Die Markierungen werden dabei bei hohen Temperaturen oberhalb der Transformationstemperatur des Glases ausgebildet, beispielsweise in einer Rohrziehanlage während der Herstellung von Glasrohren.

Die deutsche Patentanmeldung DE 102 34 002 A1 der Anmelderin offenbart ein vergleichbares Verfahren, bei dem die Markierung durch eine oder mehrere lokale Verformungen der Oberfläche des Glases ausgebildet wird, die jeweils eine Linsenwirkung realisieren.

WO 2009/128893 A1 offenbart ein Laser-Ablationsverfahren zur Ausbildung von Mikrostruktur-Aussparungen in der Oberfläche eines Glassubstrats, für Anwendungen wie beispielsweise Mikrofluidische Systeme, die Bereitstellung von hyperhydrophoben Oberflächen, Mikrohohlraum-Arrays, Mikrolinsensysteme, Zellen für Life-Science Anwendungen und die Bereitstellung von Mikro-Mischreaktoren. Die Mikrostruktur-Aussparungen in der Oberfläche eines Glassubstrats. Offenbart wird eine erste Ausführungsform, bei der eine erste Mehrzahl von Laserspots entlang einer ersten Linie gesetzt werden und anschließend eine weitere Mehrzahl von Laserspots entlang einer zweiten Linie gesetzt werden, die parallel zu der ersten Linie ist. Offenbart wird auch eine zweite Ausführungsform, bei der zeilenweise "stotternd" eine kontinuierliche Folge miteinander überlappender Laserspots in dichten Abständen zueinander ausgebildet wird, und zwar in kreuzweiser Geometrie. Dabei überlappen Laserspots miteinander. Die Mikrostruktur-Aussparungen in der Oberfläche eines Glassubstrats werden durch Laserablation ausgebildet. Dabei kommt es jedoch nicht darauf an, ob zueinander benachbarte Laserspots gleichzeitig oder zeitlich versetzt zueinander ausgebildet werden. Vielmehr sollen der Öffnungsdurchmesser und die Formgestaltung der auszubildenden Mikrostruktur-Aussparungen in der Oberfläche des Glassubstrats über den Abstand der Laserspots zueinander und über den Überlapp der Laserspots miteinander eingestellt werden.

Insbesondere zur Ausbildung von komplexen, aus mehreren Markierungspunkten bestehenden Markierungen muss jedoch innerhalb eines vergleichsweise kurzen Zeitraumes eine hohe Energiemenge in dem Glas deponiert werden, was so trotz der Ausbildung der Markierung bei Temperaturen oberhalb der Transformationstemperatur des Glases dennoch zu einer Materialschwächung führen kann, beispielsweise zu Mikrorissen.

### ZUSAMMENFASSUNG DER ERFINDUNG

Aufgabe der vorliegenden Erfindung ist es, ein verbessertes Verfahren und eine verbesserte Vorrichtung zum Markieren oder Beschreiben von Glas oder eines glasartigen und nicht notwendigerweise transparenten Werkstoffes bereitzustellen, womit eine noch zuverlässigere und materialschonendere Markierung von Glas oder einem glasartigen Werkstoff realisiert werden kann. Gemäß weiteren Gesichtspunkten der vorliegenden Erfindung soll ferner ein entsprechendes Verfahren bzw. eine entsprechende Vorrichtung bereitgestellt werden, womit besonders fälschungssichere und/oder gut auslesbare Markierungen realisiert werden können.

Diese sowie weitere Aufgaben werden gemäß der vorliegenden Erfindung durch ein Verfahren nach Anspruch 1 und eine Vorrichtung nach Anspruch 10 gelöst. Weitere vorteilhafte Ausführungsformen sind Gegenstand der rückbezogenen Unteransprüche.

Bei einem erfindungsgemäßen Verfahren werden unmittelbar zueinander benachbarte Markierungen nicht in zwei unmittelbar nacheinander ausgeführten Markierungsschritten ausgebildet. Vielmehr wird zwischen diesen beiden Markierungsschritten erfindungsgemäß ein weiterer Markierungsschritt ausgeführt, der zur Ausbildung einer weiteren Markierung dient, die nicht unmittelbar an die erste Markierung angrenzt, die mit Hilfe der beiden vorgenannten Markierungsschritten ausgebildet wird. Mit anderen Worten, erfindungsgemäß werden die Markierungen nicht unmittelbar der Reihe nach bzw. sequenziell sondern versetzt ausgebildet. Nach einer ersten Markierung wird also zunächst eine nicht unmittelbar an die erste Markierung angrenzende Markierung ausgebildet, bevor in dem weiteren Markierungsschritt oder auch in einem weiteren, zeitlich versetzten Markierungsschritt die an die erste Markierung unmittelbar angrenzende weitere Markierung ausgebildet wird. Gemäß einer beispielhaft bevorzugten Ausführungsform kann so beispielsweise nach der ersten Markierung zunächst eine übernächste Markierung ausgebildet werden, bevor in dem weiteren Markierungsschritt eine weitere Markierung ausgebildet wird, die zwischen der ersten und der übernächsten oder weiter versetzt angeordneten Markierung ausgebildet wird.

Auf diese Weise kann erfindungsgemäß ein aus mehreren diskreten Markierungen bestehendes Markierungsfeld schnell ausgebildet werden, die dabei resultierende thermische und mechanische Belastung des Materials jedoch vorteilhaft gering gehalten werden und besser auf das Material verteilt werden kann. Denn das Material kann sich zwischen der Ausbildung von unmittelbar aneinander angrenzenden Markierungen in gewissem Maße abkühlen. Somit kann die mechanische Festigkeit des Markierungsfeldes erfindungsgemäß vorteilhaft erhöht werden. Aufwändige Versuchsreihen der Erfinder haben insbesondere ergeben, dass, wenn zwei unmittelbar benachbarte Markierungen gemäß dem Stand der Technik direkt hintereinander ausgebildet werden, in der Überlappungszone zwischen den beiden Markierungen eine höhere Materialtemperatur als bei Ausführung eines einzelnen Markierungsschritts vorherrschen würde, was sich herkömmlich negativ auf die Materialfestigkeit auswirken würde. Erfindungsgemäß kann dagegen die Sequenz der Markierungsschritte so gewählt werden, dass der Temperaturgradient, der durch einen vorhergehenden Markierungsschritt hervorgerufen wird, bis zum nachfolgenden Markierungsschritt bereits weitestgehend abgebaut ist und somit das Temperaturprofil ähnlich wie bei einem einzelnen Markierungsschritt vorherrscht.

Das erfindungsgemäße versetzte Schreiben von benachbarten Markierungen kann grundsätzlich in beliebiger Reihenfolge der einzelnen Markierungen ausgeführt werden, solange gewährleistet ist, dass insgesamt das gewünschte Markierungsfeld durch die Mehrzahl von Markierungen ausgebildet wird, gleichzeitig jedoch verhindert ist, dass unmittelbar benachbarte Markierungen mit unmittelbar aufeinanderfolgend ausgeführten Markierungsschritten ausgebildet werden. Zu diesem Zweck kann ein Laserstrahl grundsätzlich auch in zufälliger Reihenfolge die einzelnen Markierungspunkte in einem Markierungsfeld schreiben, solange insgesamt gewährleistet ist, dass das gewünschte Markierungsfeld durch die Mehrzahl von Markierungen ausgebildet wird, gleichzeitig jedoch verhindert ist, dass unmittelbar benachbarte Markierungen mit zeitlich unmittelbar aufeinanderfolgend ausgeführten Markierungsschritten ausgebildet werden. Diese zufällige Reihenfolge aufeinanderfolgender Markierungspunkte unterliegt somit einer Nebenbedingung, nämlich dass verhindert ist, dass unmittelbar benachbarte Markierungen mit zeitlich unmittelbar aufeinanderfolgend ausgeführten Markierungsschritten ausgebildet werden. Grundsätzlich bevorzugt wird erfindungsgemäß jedoch eine regelmäßige Abfolge der einzelnen Markierungsschritte, beispielsweise in Form von ineinander geschachtelten oder zueinander versetzten Markierungszeilen aus einzelnen punktförmigen Markierungen.

Bei einem erfindungsgemäßen Verfahren werden die Markierungen bevorzugt entlang von zumindest einer Raumrichtung, bevorzugt von zwei zueinander orthogonalen Raumrichtungen, verteilt angeordnet ausgebildet. Bei einer solchen Ausführungsform werden die Markierungen somit in einer definierten Reihenfolge ausgebildet, die angepasst ist an das Muster der Codierung. Eine Optimierung des Codiervorganges bezüglich Geschwindigkeit oder maximalen zeitlichen Abstand zwischen zwei benachbarten Laserspots wird dabei bevorzugt.

Bevorzugt werden die Markierungen dabei unter regelmäßigen Abständen entlang der jeweiligen Raumrichtung versetzt zueinander ausgebildet, sodass insgesamt eine ein- oder zweidimensionale Matrix bestehend aus diskreten Markierungspunkten ausgebildet wird, die zur Codierung von Information verwendet werden kann.

Gemäß einer weiteren Ausführungsform bilden die Markierungsschritte in der jeweils vorbestimmten Richtung zumindest zwei Folgen von regelmäßig zueinander beabstandeten Markierungen aus, die in der jeweils vorbestimmten Richtung ineinander verschachtelt angeordnet sind. Dies kann beispielsweise durch Ablenken eines gepulsten Laserstrahls über eine Glasoberfläche realisiert werden, wobei je Scanzeile oder Scanspalte jeweils nur übernächste, drittnächste usw. Markierungspunkte geschrieben werden und die jeweiligen Zeilen bzw. Spalten in einem nachfolgenden Scanvorgang erneut versetzt abgescannt werden, um die jeweils versetzten Markierungspunkte des Markierungsfelds zu schreiben. Das zeitlich versetzte Schreiben der Markierungspunktfolgen erleichtert erfindungsgemäß die Ausbildung des Markierungsfeldes erheblich. Insbesondere können so auch für jeden einzelnen Markierungspunkt sehr gleichmäßige Bedingungen eingehalten werden.

Als besonders vorteilhaft für eine besonders hohe mechanische Festigkeit und zur Verhinderung einer Rissbildung hat sich herausgestellt, wenn die Markierungen bei einer vorbestimmten Temperatur von mindestens 20K oberhalb der Transformationstemperatur Tg des Glases ausgebildet werden. Dies kann gemäß einer ersten Ausführungsform grundsätzlich durch geeignete Einstellung der Leistung und/oder Intensität der Laserpulse erreicht werden. Gemäß einer erfindungsgemäß bevorzugten Ausführungsform wird das Markierungsfeld oder das gesamte Markierungsfeld einschließlich dessen unmittelbarer Umgebung geeignet aufgeheizt, sodass die einzelnen Markierungspunkte bei der vorbestimmten Temperatur von mindestens 20K oberhalb der Transformationstemperatur des Glases geschrieben werden.

Zu diesem Zweck kann die Temperatur des Markierungsfeldes oder des Markierungsfeldes einschließlich dessen unmittelbarer Umgebung permanent auf einer Temperatur von mindestens 20K oberhalb der Transformationstemperatur des Glases gehalten werden. Die Intensität der Laserpulse wird erfindungsgemäß so gewählt, dass durch diese keine, jedenfalls keine nennenswerte Erwärmung des Werkstoffmaterials erfolgt, insgesamt jedoch das Werkstoffmaterial jedenfalls beim Schreiben der jeweiligen Markierungspunkte auf Temperaturen von mindestens 20K oberhalb der Transformationstemperatur erwärmt ist.

Zum Aufheizen des Markierungsfeldes oder des Markierungsfeldes einschließlich dessen unmittelbarer Umgebung können grundsätzlich beliebige Heizmethoden verwendet werden, einschließlich Brennerheizung, Infrarotheizung usw. Bevorzugt wird jedoch eine Vorheizung mittels optischer Strahlung, insbesondere mit Hilfe eines geeignet aufgeweiteten bzw. abgebildeten Heizlaserstrahls, beispielsweise eines aufgeweiteten Laserstrahls eines CO₂-Lasers.

Ein noch spannungsärmeres Markierungsfeld lässt sich gemäß einer weiteren Ausführungsform erzielen, wenn die Markierungen bzw. das Markierungsfeld während und/oder nach Ausführen der Markierungsschritte bis zum Erreichen einer zweiten vorbestimmten Temperatur unterhalb der Transformationstemperatur des Glases kontrolliert abgekühlt werden bzw. wird. Hierzu kann grundsätzlich das zur Materialerwärmung eingesetzte Heizverfahren eingesetzt werden, insbesondere ein geeignet modulierter Heizlaserstrahl. Alternativ kann auch eine kontrollierte Infrarotheizung verwendet werden, beispielsweise indem das Glas unmittelbar nach Ausbildung der Markierungsschritte abtransportiert und in einem nachgeordneten Infrarotofen kontrolliert abgekühlt wird.

Zweckmäßig liegt die zweite vorbestimmte Temperatur zumindest 20K unterhalb der Transformationstemperatur des Glases, bevorzugter zumindest 40K unterhalb der Transformationstemperatur des Glases.

Nach Unterschreiten der zweiten vorbestimmten Temperatur kann gemäß einer weiteren bevorzugten Ausführungsform eine weitere Abkühlung des Glases erfolgen, beispielsweise auf Raumtemperatur oder eine geeignete Temperatur zur Weiterverarbeitung. Diese weitere Abkühlung braucht dabei nicht notwendigerweise kontrolliert im Sinne einer vorbestimmten Abkühlrate oder eines Abkühlprofils erfolgen. Das markierte Werkstoffmaterial kann insbesondere auch unter Umgebungsbedingungen allmählich abkühlen.

Gemäß einer weiteren bevorzugten Ausführungsform liegt zwischen zwei Markierungsschritten zum Ausbilden von unmittelbar benachbarten Markierungen ein vorbestimmter Zeitraum, in welchem die Intensität des Schreiblaserstrahls in oder auf dem Glas bzw. Werkstoff reduziert oder verschwindend ist. Bevorzugt beträgt dieser Zeitraum zumindest 10 ms. Auf diese Weise lässt sich erfindungsgemäß ein vorteilhaft stabiles und spannungsarmes Markierungsfeld erzielen.

Gemäß einer weiteren Ausführungsform werden zumindest einige der diskreten Markierungen, die in dem Markierungsfeld unmittelbar aneinander angrenzend ausgebildet werden, teilweise miteinander überlappend ausgebildet. Dieser Ausführungsform liegt die folgende überraschende Erkenntnis der Erfinder zugrunde, die Ergebnis aufwändiger Versuchsreihen ist: Die Erfinder haben eine Vorgehensweise zur Beurteilung der Auslesequalität zum Auslesen der Markierungspunkte entwickelt. Selbstverständlich ist es das Bestreben, die diskreten Markierungspunkte eines Markierungsfeldes so zu auszubilden, dass diese mit hoher Genauigkeit und Zuverlässigkeit ausgelesen werden können, insgesamt also die zuvor in dem Markierungsfeld codierte Information auch wieder präzise und zuverlässig wieder ausgelesen werden kann. Zu diesem Zweck würde man eigentlich erwarten, dass unmittelbar benachbarte Markierungspunkte tatsächlich beabstandet zueinander in dem Werkstoffmaterial ausgebildet sind, also in Form von diskreten Markierungspunkten, die nicht miteinander überlappen. Dies hat zwar den Nachteil einer - bei gleichem Durchmesser der Markierungspunkte - geringeren Packungsdichte des Markierungsfeldes, würde jedoch den Vorteil einer hohen Auslesegenauigkeit bieten. Überraschenderweise haben die Erfinder nun festgestellt, dass sich die Auslesegenauigkeit der Markierungspunkte sogar erhöhen lässt, wenn unmittelbar benachbarte Markierungspunkte in einem gewissen Ausmaß miteinander überlappen. Dies bietet erfindungsgemäß den Vorteil einer noch höheren Packungsdichte bei gleichzeitig höherer Zuverlässigkeit und Auslesegenauigkeit. Eigentlich würde man bei einem gewissen Überlapp von unmittelbar benachbarten Markierungspunkten eine Verschlechterung der Auslesequalität erwarten. Ohne auf diese Erklärung festgelegt werden zu wollen, wird jedoch als maßgeblicher Grund für die tatsächlich beobachtete Verbesserung der Auslesequalität vermutet, dass bei den diskreten Markierungspunkten, die als konkave Abbildungslinsen für das das Markierungsfeld auslesende Licht wirken, tatsächlich nur der eigentliche Kern der jeweiligen Markierungspunkte als abbildende Linse wirkt, nicht jedoch der äußere Umfangsrand des jeweiligen Markierungspunkts. Es sei dabei angemerkt, dass die jeweils optimale Größe der Markierungspunkte zusätzlich abhängig von der Auslegung des optischen Inspektionssystems sein kann.

Die Markierungspunkte können dabei grundsätzlich auch als ovale Markierungspunkte ausgebildet werden, die so ausgebildet werden, dass unmittelbar benachbarte Markierungspunkte in gewissem Maße miteinander überlappen. Gemäß einer bevorzugten Ausführungsform werden diejenigen diskreten Markierungen, die in dem Markierungsfeld unmittelbar aneinander angrenzen, jedoch als kreisförmige Markierungen mit einem jeweils vorbestimmten Durchmesser und so ausgebildet, dass der jeweils vorbestimmte Durchmesser dieser unmittelbar aneinander angrenzenden Markierungen um bis zu 10%, bevorzugt um bis zu 20% größer ist als der Abstand zwischen diesen Markierungen.

Ein weiterer Gesichtspunkt der vorliegenden Erfindung betrifft ferner eine Vorrichtung zum Markieren bzw. Beschreiben eines Glases oder eines glasartigen, nicht notwendigerweise transparenten Werkstoffes nach Anspruch 10, die geeignet zur Ausführung des vorgenannten Verfahrens ausgelegt ist. Somit wird auch eine Vorrichtung zum Markieren von Glas oder eines glasartigen Werkstoffs mittels einer Mehrzahl von diskreten Markierungen in oder auf dem Glas oder glasartigen Werkstoff bereitgestellt, die gemeinsam ein Markierungsfeld ausbilden, insbesondere zur Durchführung des Verfahrens wie vorstehend dargelegt, umfassend: einen Schreiblaser zum Erzeugen eines auf das Glas oder den Werkstoff abgebildeten Schreiblaserstrahls und ein Verstellmittel, um den Schreiblaserstrahl und das Glas oder den Werkstoff während des Ausbildens des Markierungsfeldes relativ zueinander zu bewegen, wobei das Verstellmittel ausgelegt ist, um den Schreiblaserstrahl und das Glas oder den Werkstoff so relativ zueinander zu bewegen, dass in oder auf dem Glas oder Werkstoff eine Mehrzahl von diskreten Markierungen ausgebildet wird, die gemeinsam das Markierungsfeld ausbilden, und eine Steuereinrichtung vorgesehen ist, die so ausgelegt ist, dass in einer vorbestimmten Richtung unmittelbar benachbarte Markierungen in zwei Markierungsschritten ausgebildet werden, die nicht unmittelbar nacheinander ausgeführt werden. Erfindungsgemäß ist die Steuereinrichtung ferner so ausgelegt, dass die jeweilige Folge von regelmäßig zueinander beabstandeten Markierungen durch zeilen- oder spaltenweise Relativbewegung zwischen dem Schreiblaserstrahl und dem Glas oder glasartigen Werkstoff entlang der vorbestimmten Richtung oder durch Ausbildung der Markierungen in zufälliger Reihenfolge derart ausgebildet wird, dass eine Ausbildung von unmittelbar benachbarten Markierungen mittels zeitlich unmittelbar aufeinanderfolgend ausgeführter Markierungsschritte verhindert ist

### FIGURENÜBERSICHT

Nachfolgend wird die Erfindung in beispielhafter Weise und unter Bezugnahme auf die beigefügten Zeichnungen beschrieben werden, woraus sich weitere Vorteile, Merkmale und zu lösende Aufgaben ergeben werden. Es zeigen:
- Fig. 1: in einer schematischen Draufsicht ein Markierungsfeld bestehend aus einer Mehrzahl von diskreten Markierungen gemäß der vorliegenden Erfindung;
- Fig. 2: eine Sequenz von Laserpulsen zur Ausbildung des Markierungsfelds gemäß der Fig. 1;
- Fig. 3: eine Vorrichtung gemäß der vorliegenden Erfindung zur Erzeugung eines erfindungsgemäßen Markierungsfeldes, wie in der Fig. 1 gezeigt;
- Fig. 4: die Zeitabhängigkeit der Temperatur von Markierungen bzw. des Markierungsfelds bei einem Verfahren gemäß der vorliegenden Erfindung;
- Fig. 5a und Fig. 5b: in einer Gegenüberstellung digitale Matrixcodes gemäß der vorliegenden Erfindung;
- Fig. 6a und Fig. 6b: den Spannungsverlauf quer durch eine Markierung entlang von zwei zueinander orthogonalen Achsen, die mit einem herkömmlichen Verfahren ohne Zusatzheizung erzeugt wurden;
- Fig. 7a und Fig. 7b: den entsprechenden Spannungsverlauf quer durch eine Markierung entlang von zwei zueinander orthogonalen Achsen, die mit einem Verfahren gemäß der vorliegenden Erfindung mit Zusatzheizung erzeugt wurde; und
- Fig. 8 und Fig. 8b: den Spannungsverlauf quer durch eine Markierung entlang von zwei zueinander orthogonalen Achsen, die mit einem Verfahren gemäß einer weiteren Ausführungsform der vorliegenden Erfindung hergestellt wurde und bei der ein Spannungsabbau durch kontrolliertes Abtempern realisiert wurde.

In den Figuren bezeichnen identische Bezugszeichen, identische oder im Wesentlichen gleichwirkende Elemente oder Elementgruppen.

### AUSFÜHRLICHE BESCHREIBUNG VON BEVORZUGTEN AUSFÜHRUNGSBEISPIELEN

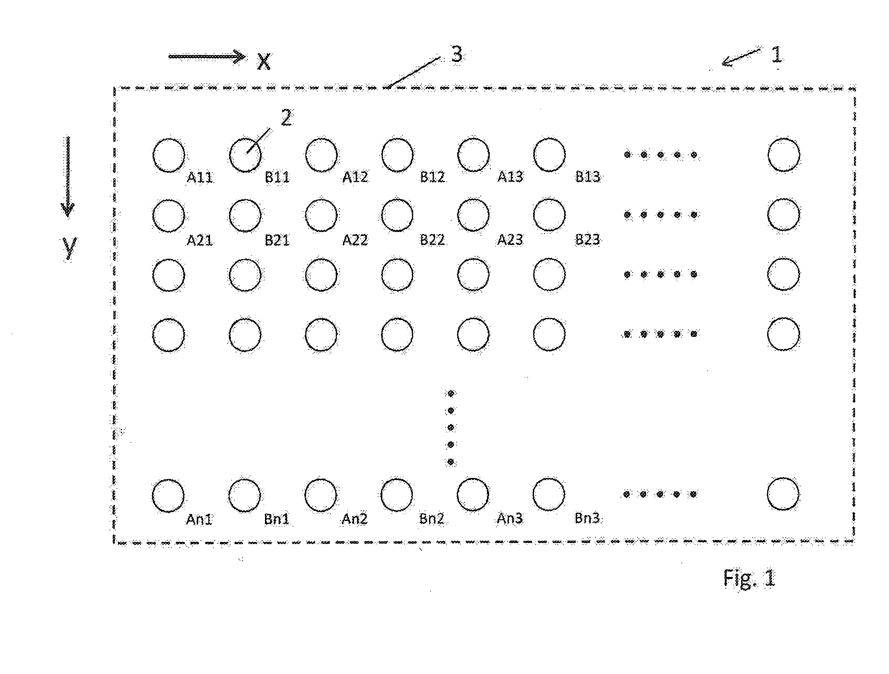

Die Fig. 1 zeigt beispielhaft einen digitalen Matrixcode 1, der aus einer Mehrzahl von Markierungen 2 zusammengesetzt ist, die entlang von Zeilen (in x-Richtung) und Spalten (entlang der y-Richtung) verteilt angeordnet sind, und zwar in regelmäßigen Abständen zueinander. Beispielhalft sei nachfolgend angenommen, dass die Matrixanordnung der Markierungspunkte 2 den Matrixcode 1 vollständig abdeckt, wenngleich dies in praktischen Anwendungsbeispielen nicht der Fall zu sein braucht. Insgesamt sind die Markierungen 2 gemäß der Fig. 1 innerhalb eines Markierungsfeldes 3 angeordnet. Die einzelnen Markierungspunkte 2 können dabei grundsätzlich so ausgebildet werden, wie in der DE 102 34 002 A1 und DE 101 22 335 C1 der Anmelderin beschrieben, allerdings mit den nachfolgend beschriebenen Modifikationen.

Durch die jeweiligen Markierungen kann insbesondere eine lokale Verformung mit Linsenwirkung hervorgerufen werden, sodass der digitale Matrixcode 1 automatisch ausgelesen werden kann. Dieser codiert so Information, beispielsweise hinsichtlich Material, Beschaffenheit, Herkunft, Produktionsdatum usw. des Glases oder auch hinsichtlich Inhalt, Herkunft, Produktionsdatum, Chargennummer und dergleichen bei einem aus Glas hergestellten Produkt, beispielsweise einem Primärpackmittel für die Pharmaindustrie, insbesondere einer Glasampulle. Dafür kann z.B. ein Data Matrix Code nach ISO/IEC 16022:2000 und ISO/IEC 24720:2006 verwendet werden. Der Codierungsinhalt kann z.B. entsprechend der EFPIA ausgelegt werden (Pressemittteilung der European Federation of Pharmaceutical Industries and Associations vom 7.10.2008).

Zur Codierung kann dabei eine einzelne Brennweite einer jeweiligen lokalen Verformung verwendet werden oder können auch verschiedene Brennweiten derselben lokalen Verformung oder die Brennweiten verschiedener lokaler Verformungen verwendet werden. Ferner können auch die Abstände der einzelnen Verformungen zueinander zur Codierung einer Information verwendet werden.

Bei einem digitalen Matrixcode 1 gemäß der vorliegenden Erfindung werden die Markierungspunkte 2 nun nicht mit unmittelbar nacheinander ausgeführten Markierungsschritten ausgebildet, also der Reihe nach zeilen- und spaltenweise. Vielmehr werden die Markierungspunkte 2 so gesetzt, dass in einer Richtung x, y unmittelbar zueinander benachbarte Markierungen in zwei Markierungsschritten ausgebildet werden, die nicht unmittelbar nacheinander ausgeführt werden, sondern zwischen denen ein weiterer Markierungsschritt zur Ausbildung eines nicht unmittelbar angrenzenden Markierungspunkts 2 ausgeführt wird.

Nimmt man bei dem Beispiel gemäß der Fig. 1 beispielsweise an, dass der Matrixcode 1 zeilenweise durch Scannen eines Laserstrahls in x-Richtung geschrieben wird, so wird nach Ausbildung der Markierung A11 nicht die unmittelbar angrenzende Markierung B11 geschrieben, sondern vielmehr die in diesem Beispiel übernächste Markierung A12 und anschließend die dann wiederum übernächste Markierung A13 usw., bis schließlich die gesamte erste Zeile des Matrixcodes 1 geschrieben ist. In dem Beispiel bezeichnet deshalb der Buchstabe A Markierungen, die während des ersten Scannens der jeweiligen Matrixcodezeile geschrieben werden. Entsprechend werden in der Fig. 1 Markierungen, die in einem nachfolgenden Scannvorgang derselben Matrixcodezeile geschrieben werden, mit dem Buchstaben B bezeichnet. Somit werden in einem nachfolgenden Zeilenscann in der ersten Zeile nacheinander die Markierungspunkte B11, B12, B13, usw. geschrieben, bis schließlich die gesamte erste Matrixcodezeile mit dann relativ zu dem ersten Scannvorgang versetzten Markierungspunkten geschrieben ist. Dieser Vorgang wiederholt sich entsprechend mit den weiteren Matrixcodezeilen, beginnend mit A21, A31, usw., bis schließlich der gesamte Matrixcode 1 geschrieben ist.

Bei dem Matrixcode 1 gemäß der Fig. 1 bilden somit die von den Markierungspunkten A11, A12, A13,... und von den Markierungspunkten B11, B12, B13,... gebildeten Folgen jeweils Folgen von regelmäßig zueinander beanstandeten Markierungen aus, die in der jeweils vorbestimmten Richtung (d.h. bei einem zeilenweisen Scan in x-Richtung) ineinander verschachtelt angeordnet sind.

Selbstverständlich können auch andere Schreibschemata gewählt werden, können also beispielsweise in der jeweiligen Matrixcodezeile alternativ auch der erste, vierte, siebte,... Markierungspunkt geschrieben werden, anschließend der zweite, fünfte, achte, .... Markierungspunkt und schließlich der dritte, sechste, neunte,.... Markierungspunkt, bis schließlich die gesamte jeweilige Matrixcodezeile geschrieben ist.

Zum Schreiben der jeweiligen Zeilen bzw. Spalten wird bevorzugt ein Schreiblaserstrahl verwendet. Grundsätzlich können jedoch hierzu auch mehrere zueinander versetzte Schreiblaserstrahlen gleichzeitig verwendet werden.

Durch den vorstehend beschrieben Schreibvorgang ist die Temperaturverteilung eines Markierungspunktes durch gerade zuvor beschriebene benachbarte Markierungspunkte deutlich weniger gestört. Auf diese Weise können erfindungsgemäß stabilere und spannungsärmere Markierungsfelder realisiert werden.

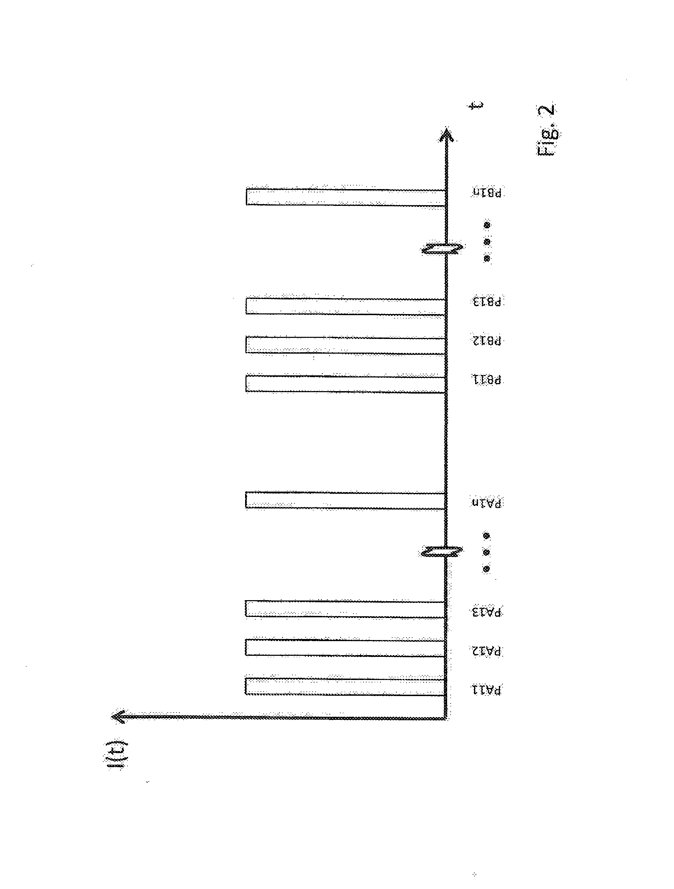

Gemäß der Erfindung werden die Markierungen mit Hilfe von kurzen Laserpulsen ausgebildet, wie beispielhaft in der Fig. 2 gezeigt. Dabei werden mit PA11, PA12,... PAln Laserpulse bezeichnet, die zum Schreiben der Markierungspunkte (vgl. Fig. 1) A11, A12,... Aln verwendet werden. Entsprechendes gilt auch für die mit PB11, ... PBln bezeichneten Laserpulse.

Bei jedem Laserpuls wird auch eine dünne Glasschicht mit erwärmt. Für die Festigkeit einer Lasermarkierung hat es sich als vorteilhalft erwiesen, diese Hitzezone bzw. thermische Einwirkung möglichst gering zu halten. Zu diesem Zweck werden möglichst kurze Laserpulse verwendet. Würden nun zwei benachbarte Markierungspunkte direkt hintereinander geschrieben werden, so ergäbe dies in der Überlappungszone eine höhere Materialtemperatur als bei einzelnen Laserpulsen, was sich auf die Festigkeit negativ auswirken würde. Wenn zwischen benachbarten Einzelmarkierungen jedoch eine ausreichende Pause ohne oder mit reduzierter Strahlungseinwirkung besteht, ist der Temperaturgradient durch den vorhergehenden Laserpuls weitestgehend abgebaut und das Temperaturprofil ähnlich wie bei einem Laserbeschuss ohne Resttemperatur von der Ausbildung einer unmittelbar benachbarten Markierung. Aufwändige Versuchsreihen der Erfinder zum zeitlichen Abstand zwischen unmittelbar nacheinander ausgeführten Laserpulsen haben ergeben, dass der zeitliche Abstand zumindest 10 ms betragen sollte.

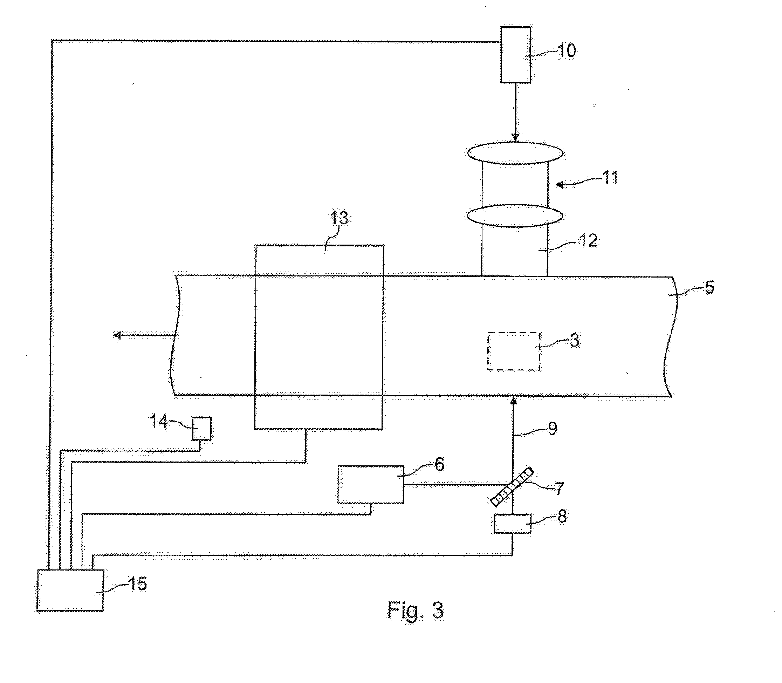

Die Fig. 3 zeigt beispielhaft eine Vorrichtung zum Ausführen des vorstehenden Verfahrens. Dabei wird angenommen, dass das Glas 5, beispielsweise ein Glasrohr, das aus einer Glasrohr-Herstellungsanlage abgezogen wird, kontinuierlich oder schrittweise an einem Schreiblaserstrahl 9 eines Schreiblasers 6 vorbei bewegt wird, wobei die Bewegungsrichtung durch den am linken Bildrand dargestellten Pfeil bezeichnet ist. Gemäß der Fig. 3 wird der Schreiblaserstrahl 9 durch einen von einem Antrieb 8 verstellten Scannerspiegel 7 geeignet abgelenkt, um eine Relativbewegung zwischen Schreiblaserstrahl 9 und Glas 5 zu realisieren. Beispielsweise kann der Schreiblaserstrahl 9 transversal über den Rohrumfang gescannt werden. Die vorstehend anhand der Fig. 1 und 2 beschriebene Sequenz von Laserpulsen wird durch geeignete Steuerung des Schreiblasers 6 und des Scannerantriebs 8 mit Hilfe einer zentralen Steuereinrichtung 15 realisiert. Bei dem Schreiblaser kann es sich um einen gepulsten CO₂-Laser handeln, mit Pulsanstiegszeiten von kleiner als 75µsec, Pulsfrequenzen von oberhalb 5 kHz sowie Laserleistungen von kleiner 20W, wobei die vorstehenden Parameter nur beispielhaft sein sollen. Um die Gefahr einer Rissbildung noch weiter zu verringern und die erforderliche Langzeitfestigkeit zu erhöhen, die Laserleistung für eine optimale Ausbildung der Markierungspunkte jedoch durch die Glaseigenschaften und die jeweils verwendete Abbildung des Schreiblaserstrahls vorbestimmt ist, hat es sich als vorteilhalft erwiesen, das gesamte Markierungsfeld 3 (vgl. Fig. 1) auf eine vorbestimmte Temperatur vorzuheizen. Gemäß einer weiteren Ausführungsform kann zusätzlich zum Markierungsfeld 3 auch noch dessen unmittelbare Umgebung mit vorgeheizt werden. Zu diesem Zweck wird gemäß der Fig. 3 ein weiterer Heizlaser 10 verwendet, der mittels eines Teleskops bzw. einer Strahlaufweitung 11 geeignet aufgeweitet und als aufgeweiteter Heizlaserstrahl 12 geeignet auf das Glas 5 abgebildet wird. Als Heizlaser 10 kann insbesondere ein CO₂-Laser eingesetzt werden. Alternative Heizquellen können auch ein Brenner oder eine Infrarotheizung sein.

Mit einer solchen zusätzlichen Heizeinrichtung kann das Markierungsfeld oder das Markierungsfeld und dessen unmittelbare Umgebung auf eine vorbestimmte Temperatur von mindestens 20K oberhalb der Transformationstemperatur Tg des Glases erwärmt werden.

Als grundsätzlich denkbare, wenngleich nicht bevorzugte weitere Alternative kann die zusätzliche Heizleistung auch so bemessen sein, dass die Temperatur des Markierungsfeldes oder des Markierungsfeldes und dessen unmittelbare Umgebung auf eine Temperatur unterhalb einer ersten vorbestimmten Temperatur erwärmt wird, die mindestens 20K oberhalb der Transformationstemperatur des Glases liegt, und können die einzelnen Laserpulse dann dazu verwendet werden, um die jeweilige Wechselwirkungszone des Schreiblaserstrahles mit dem Glas auf eine geeignete Prozesstemperatur von mindestens 20K oberhalb der Transformationstemperatur des Glases zu überführen.

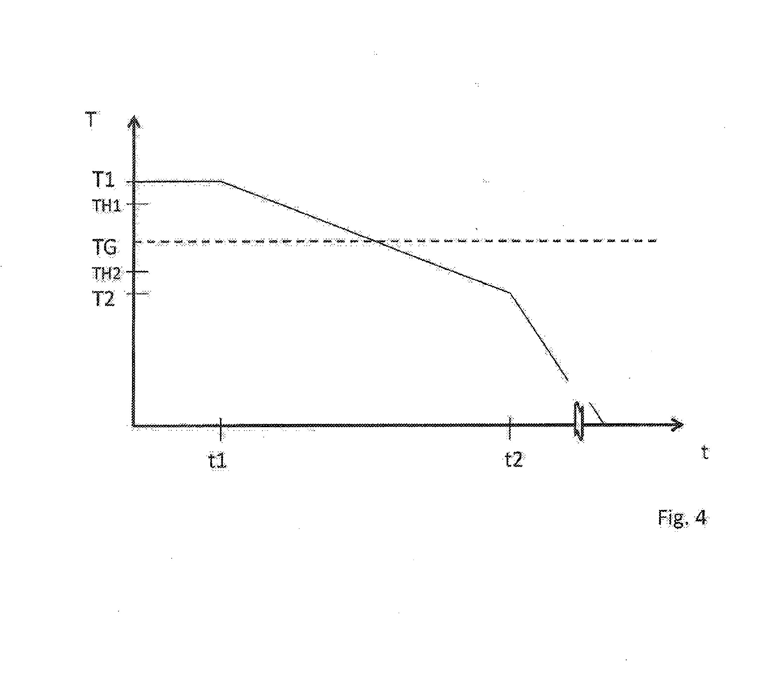

Die Fig. 4 zeigt die Prozesstemperaturen bei einem Verfahren nach der vorliegenden Erfindung. In der Darstellung ist die Temperatur T einer Wechselwirkungszone, also entweder eines einzelnen Markierungspunktes oder des gesamten Markierungsfeldes, gegen die Zeit t aufgetragen. Mit Tg wird die Transformationstemperatur des Glases bezeichnet, die typischerweise im Bereich von 500 °C bis 600 °C liegt. In der Darstellung gemäß der Fig. 4 ist der zeitliche Verlauf des Temperaturanstieges auf die Prozesstemperatur T1 aus Vereinfachungsgründen ausgeblendet. Der eigentliche Schreibvorgang beginnt zum Zeitpunkt Null bei einer Temperatur T1, die gemäß der vorliegenden Erfindung mindestens 20K oberhalb der Transformationstemperatur Tg des Glases liegt. Der zum Schreiben verwendete Laserpuls hat eine Zeitdauer, die kleiner oder gleich t1 ist. Im Anschluss an t1 fällt die Temperatur der Wechselwirkungszone kontrolliert von einem Wert T1 auf einen Wert T2 ab, die zumindest 20K und bevorzugter zumindest 40K unterhalb der Transformationstemperatur Tg des Glases liegt. Es muss gewährleistet sein, dass alle Laserimpulse in diesem Temperaturbereich und in der Zeit T1 auf das Glas einwirken. Gemäß der Fig. 4 ist die Temperatur T2 zum Zeitpunkt t2 erreicht, wobei gemäß der Fig. 4 eine lineare Temperaturrampe gefahren wird, wenngleich grundsätzlich beliebige andere Temperaturverläufe möglich sind, solange die maximale Prozesstemperatur T1 während der kontrollierten Abkühlung nicht wieder überschritten wird.

Bei Erreichen der Temperatur T2 sind mechanische Spannungen bereits so stark abgebaut, dass im Anschluss daran eine raschere, gegebenenfalls auch unkontrollierte Abkühlung erfolgen kann, bis die Raumtemperatur oder die Prozesstemperatur eines nachfolgenden Prozessschrittes erreicht ist. Gemäß einer weiteren Ausführungsform kann dieser weitere Abkühlvorgang auch erst nach Unterschreiten einer Temperatur von zumindest 50K unterhalb der Transformationstemperatur des Glases gestartet werden.

Zur kontrollierten Abkühlung im Temperaturbereich T1 bis T2 kann gemäß einer ersten Ausführungsform der Heizlaserstrahl 12 (vgl. Fig. 3) selbst verwendet werden, indem dessen Leistung unmittelbar im Anschluss an die Ausbildung des Markierungsfelds entsprechend reduziert wird. Gemäß einer weiteren bevorzugten Ausführungsform kann das Markierungsfeld 3 jedoch auch unmittelbar im Anschluss an den Markierungsschritt in einen stromabwärts befindlichen Kühlbereich 13 eingebracht werden und diesen gegebenenfalls solange durchlaufen, bis die Temperatur T2 erreicht ist. Dieser nachgeordnete Kühlbereich 13 kann beispielsweise auch durch einen üblichen Infrarotofen realisiert werden, der bevorzugt in unmittelbarer räumlicher Nähe zum Wechselwirkungsbereich zwischen Schreiblaserstrahl 9 und Glas 5 liegen sollte.

Mit TH1 bzw. TH2 sind in der Fig. 4 weitere mögliche Vorheiztemperaturen des Markierungsfelds 3 dargestellt. Grundsätzlich kann bei entsprechender Bemessung der Schreiblaserpulse die Vorheiztemperatur somit auch unterhalb der Transformationstemperatur Tg liegen, wenngleich eine Vorheiztemperatur TH1 geringfügig unterhalb oder identisch zur ersten vorbestimmten Temperatur T1 bevorzugt wird.

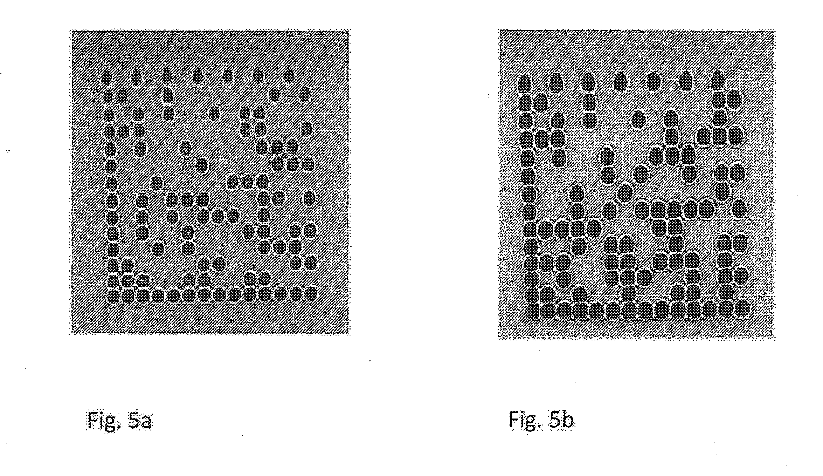

Die Fig. 5a und 5b zeigen in einer Gegenüberstellung zwei auf einem Glasrohr ausgebildete Matrixcodemarkierungen, die bei unterschiedlichen Leistungen des Schreiblaserstrahles erzeugt wurden. Während in dem Matrixcode gemäß der Fig. 5a die einzelnen Markierungspunkte größtenteils deutlich voneinander getrennt sind, gehen diese bei dem Matrixcode gemäß der Fig. 5b teilweise sogar ineinander über, was jedoch überraschenderweise keinen Einfluss auf die Lesbarkeit des Matrixcodes mit Hilfe einer optischen Ausleseeinrichtung hat. Ein Matrixcode gemäß der Fig. 5b wird insbesondere dann erzeugt, wenn zum Schreiben von benachbarten Markierungspunkten Laserspots verwendet werden, die geringfügig überlappen. Es hat sich herausgestellt, dass ein solcher geringer Überlapp die Lesbarkeit von Matrixcodes verbessern kann. Der optimale Grad der Überlappung hängt von der verwendeten Leseeinrichtung (Beleuchtung/Optik) ab. Das heißt, die Laserparameter sind für eine bestimmte Leseeinheit optimierbar.

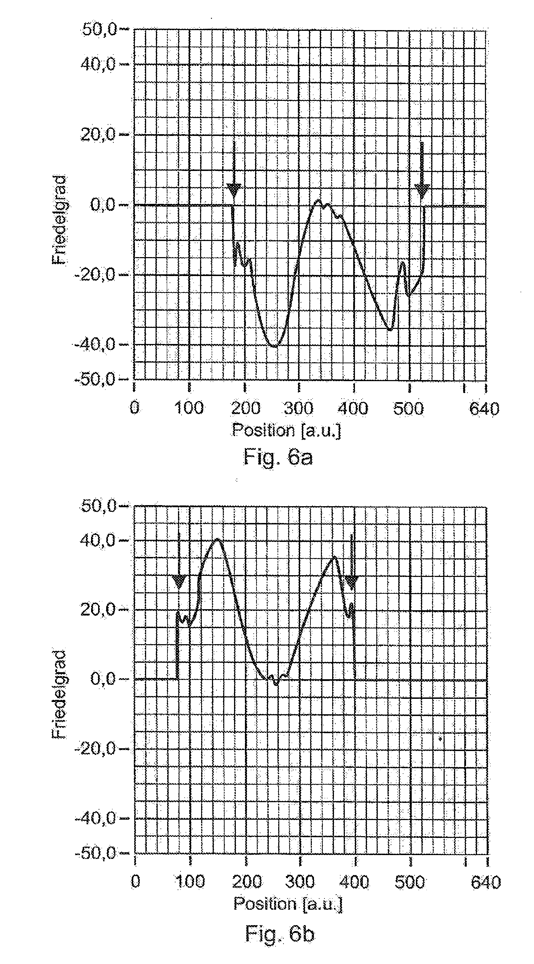

Anhand der Fig. 6a bis 7b wird nachfolgend der Einfluss der Temperatur beim Aufheizen des Glases vor und während der Codierung diskutiert. Zu diesem Zweck wurden bei ansonsten gleichen Prozessparametern die Spannungsverläufe quer durch die lasermarkierte Zone entlang von zwei zueinander orthogonalen Raumrichtungen gemessen. Dargestellt sind die optische Verzögerung (in Friedel-Grad), die ein Maß für die mechanische Spannung im Glas ist.

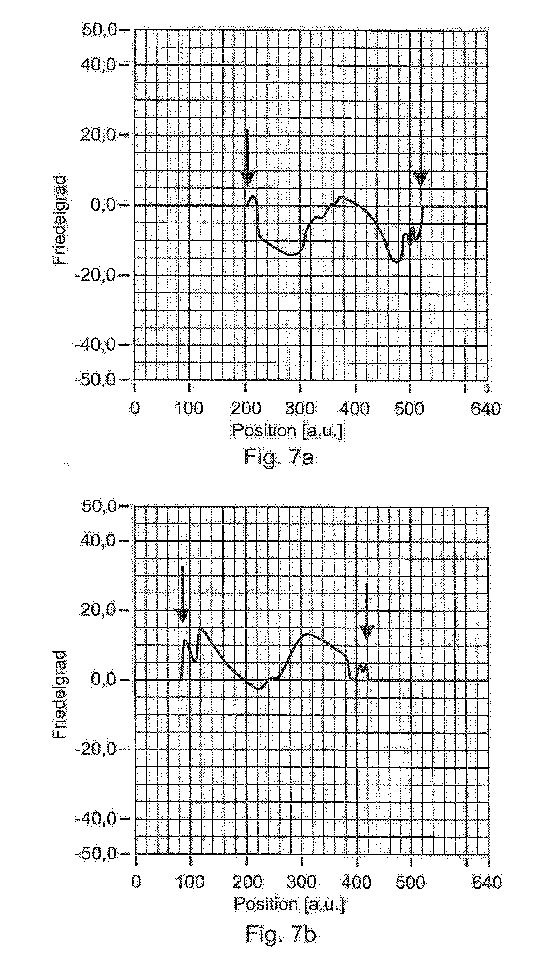

So zeigt die Fig. 6a beispielsweise den Spannungsverlauf quer durch einen Markierungspunkt entlang einer ersten Richtung und die Fig. 6b den entsprechenden Spannungsverlauf in einer Richtung senkrecht dazu (dargestellt ist hier der sogenannte Friedel-Grad). Die vertikalen Pfeile markieren dabei den Beginn der Rohrwandung des Glasrohrs, wo die Messung des jeweiligen Spannungsverlaufs bedingt durch das verwendete Messverfahren nicht mehr aussagekräftig sind. Ab diesen Markierungspfeilen wurde deshalb die jeweilige Messkurve auf den Wert null gesetzt. Dies gilt auch für die weiteren Messkurven in den Figuren 7a bis 8b.

Bei dem Markierungspunkt gemäß den Fig. 6a und 6b wurde keine Zusatzheizung vor und während der Codierung verwendet. Vielmehr wurde die Leistung der Schreiblaserpulse so gewählt, dass geeignete Temperaturen oberhalb von Tg erzielt werden konnten.

Dagegen wurde zum Schreiben des Markierungspunktes gemäß den Fig. 7a und 7b eine Zusatzheizung in Form eines zusätzlichen Heizlaserstrahls, wie beispielhaft in der Fig. 3 dargestellt, verwendet, nämlich eines aufgeweiteten Laserstrahls eines weiteren CO₂-Lasers. Die Leistung des CO₂-Lasers wurde so eingestellt, dass das zu beschreibende Markierungsfeld und dessen unmittelbare Umgebung bereits auf die vorgenannte erste vorbestimmte Temperatur oder auf einen Wert knapp unterhalb dieser Temperatur vorgeheizt war, wobei die erste vorbestimmte Temperatur eine Temperatur von zumindest 20K oberhalb der Transformationstemperatur des Glases ist.

Durch den Vergleich der Fig. 6a/6b und die Fig. 7a/7b erkennt man, dass durch die zusätzliche Vorheizung deutlich spannungsärmere Markierungspunkte realisiert werden können.

Zum Heizen des Markierungsfeldes wurde bei einem Ausführungsbeispiel ein handelsüblicher kontinuierlicher 100 W CO₂-Laser der Firma Synrad verwendet, wobei die Laseroptik so gewählt und ein Teleskop soweit angepasst wurde, dass das gesamte Markierungsfeld vor dem Beschreiben mit dem Schreiblaserstrahl auf mindestens 20K oberhalb von Tg aufgeheizt werden konnte. Mit einer solchen Laservorheizung konnte eine relativ kurze Vorheizzeit von beispielsweise maximal 6 Sekunden realisiert werden, sodass die Taktzeiten zum Schreiben von Matrixcodes erheblich verringert werden konnten. Der Energieeintrag betrug dann beispielsweise bei einem Matrixcode der Abmessung 2 x 2 mm ca. 25 W mm⁻² s⁻¹.

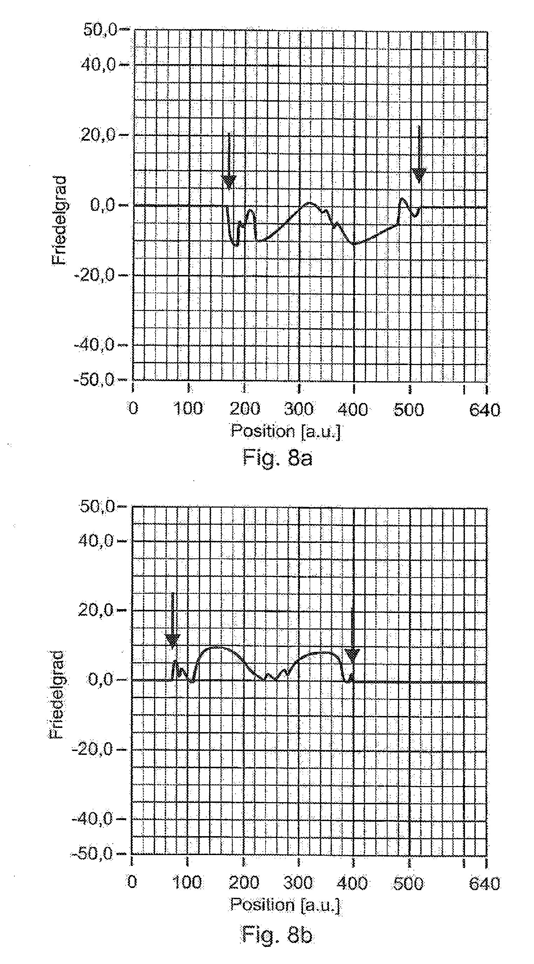

Eine weitere Reduzierung von Spannungen lässt sich durch das vorstehend beschriebene kontrollierte Abkühlen des Glases bzw. Glasprodukts nach dem Schreibvorgang realisieren, was nachfolgend anhand der Fig. 8a und 8b weiter beschrieben werden soll. Zur kontrollierten Abkühlung wurde dabei ein Laser benutzt, dessen Laserparameter so eingestellt waren, dass die Temperatur des Markierungsfeldes von dem Wert T1 (vgl. Fig. 4) auf einen Wert T2 von beispielsweise 20K unterhalb von Tg mit einer Abkühlgeschwindigkeit von 1K/s reduziert wurde. Dadurch konnte gleichzeitig auch eine Lasertemperung realisiert werden um zu verhindern, dass sich die Abkühlung während der Codierung schon zu schnell vollzieht. Ein beispielhaftes Ergebnis ist, unter vergleichbaren Bedingungen wie bei der Erzeugung der Lasermarkierung, die anhand der Fig. 7a und 7b vorstehend diskutiert wurde, in den Fig. 8 und 8b dargestellt.

Ein erfindungsgemäßer Matrixcode kann bei einem Fertigprodukt, beispielsweise einem in einem Glas-Primärpackmittel abgefüllten Pharmaprodukt, nicht mehr verändert oder manipuliert werden. Im Gegensatz zu herkömmlichen Markierungen, die bei Raumtemperatur geschrieben werden, kann der erfindungsgemäß vorgeschlagene Matrixcode am Fertigprodukt nicht mehr verändert oder verfälscht werden, da die dazu notwendige Temperaturbehandlung nicht realisiert werden kann. Der Matrixcode gemäß der vorliegenden Erfindung ist damit sicher gegenüber nachträglichen Manipulationen.

Allerdings kann der Matrixcode im Prozess der Verarbeitung, also solange die Temperatur des Glases noch nicht allzu stark abgefallen ist, durch Wärmebehandlung unlesbar bzw. ungültig gemacht werden. Dies hat beispielsweise den Vorteil, dass im Verarbeitungsprozess erkannte fehlerhafte Produkte durch Zerstörung des Matrixcodes sicher gekennzeichnet werden können und somit eine Auslieferung an Kunden vermieden werden kann. Zu diesem Zweck ist bei dem Ausführungsbeispiel gemäß der Fig. 3 eine zusätzliche Prüfeinrichtung 14, beispielsweise in Form eines optischen Detektors, vorgesehen, um Eigenschaften des Glases zu prüfen bzw. zu detektieren. Wenn ein Fehler festgestellt wird, so gibt die zentrale Steuereinrichtung 15 einen Steuerbefehl aus, der bewirkt, dass das Glasprodukt 5 erneut in den Wirkungsbereich des Schreiblaserstrahls 9 gelangt (oder alternativ in den Wirkungsbereich eines weiteren Schreiblaserstrahls stromabwärts), um den zuvor generierten Matrixcode unkenntlich zu machen.

Wenngleich vorstehend beschrieben wurde, dass das zu markierende Produkt ein Glasrohr sein soll, das aus einer Glasrohr-Herstellungsanlage abgezogen wird, betrifft eine bevorzugte Anwendung der vorliegenden Erfindung die Markierung von individuellen Primärpackmitteln aus Glas oder einem glasartigen Werkstoff, beispielsweise von Primärpackmitteln für pharmazeutische oder medizinische Präparate, wie beispielsweise Spritzen, Karpulen oder Fläschchen, die mit dem erfindungsgemäßen Verfahren zuverlässig und fälschungssicher markiert und gekennzeichnet werden können. Sollte sich aus irgendeinem Grunde herausstellen, dass das Primärpackmittel nicht eingesetzt werden soll, so kann das entsprechende Markierungsfeld mittels der vorstehend beschriebenen Vorrichtung auch wieder unkenntlich bzw. nicht auslesbar gemacht werden.

### Bezugszeichenliste

- 1: digitaler Matrixcode
- 2: Einzelmarkierung
- 3: erhitzter Bereich/Markierungsfeld
- 5: Glasrohr
- 6: Markierungslaser/Schreiblaser
- 7: Scanner/Scannerspiegel
- 8: Scannerantrieb
- 9: Schreiblaserstrahl
- 10: Heizlaser
- 11: Teleskop/Strahlaufweitung
- 12: aufgeweiteter Heizlaserstrahl
- 13: Kühlbereich/Kühlofen
- 14: Detektor/Prüfeinrichtung
- 15: zentrale Steuereinheit

## Patentansprüche

1. Verfahren zum Markieren von Glas oder eines glasartigen Werkstoffs, bei dem ein Schreiblaserstrahl (9) und das Glas oder der glasartige Werkstoff (5) relativ zueinander bewegt werden, um in oder auf dem Glas oder glasartigen Werkstoff ein Markierungsfeld (3) auszubilden, das aus einer Mehrzahl von diskreten Markierungen (A, B) besteht, die in diskreten Markierungsschritten ausgebildet werden und entlang zumindest einer Richtung (x, y) verteilt angeordnet sind, wobei
in einer vorbestimmten Richtung (x, y) unmittelbar zueinander benachbarte Markierungen (A11, B11; A11, A21) in zwei Markierungsschritten (PA11, PA12; PA11, PA31) ausgebildet werden, die nicht unmittelbar nacheinander ausgeführt werden und
die Markierungsschritte in der vorbestimmten Richtung (x; y) zumindest zwei Folgen von regelmäßig zueinander beabstandeten Markierungen ausbilden, die in der vorbestimmten Richtung ineinander verschachtelt angeordnet sind
**dadurch gekennzeichnet, dass** die jeweilige Folge von regelmäßig zueinander beabstandeten Markierungen durch zeilen- oder spaltenweise Relativbewegung zwischen dem Schreiblaserstrahl (9) und dem Glas oder glasartigen Werkstoff (5) entlang der vorbestimmten Richtung (x; y) oder durch Ausbildung der Markierungen in zufälliger Reihenfolge derart ausgebildet wird, dass eine Ausbildung von unmittelbar benachbarten Markierungen mittels zeitlich unmittelbar aufeinanderfolgend ausgeführter Markierungsschritte verhindert ist.

2. Verfahren nach Anspruch 1, wobei zwischen einem jeweiligen ersten Markierungsschritt (PA11) und einem jeweiligen zweiten Markierungsschritt (PB11; Pa21) zum Ausbilden einer jeweiligen ersten und zweiten Markierung (A11, B11; A11, A21), die in der vorbestimmten Richtung (x; y) unmittelbar benachbart zueinander angeordnet sind, ein weiterer Markierungsschritt (PA12; PA31) zum Ausbilden einer weiteren Markierung (A12; A31) ausgeführt wird, die in der vorbestimmten Richtung nicht unmittelbar zu der ersten Markierung (A11) benachbart ist.

3. Verfahren nach einem der vorhergehenden Ansprüche, wobei die Markierungen mittels kurzer Laserpulse ausgebildet werden, wobei die Markierungen des Markierungsfeldes (3) eine zweidimensionale Matrix (1) ausbilden, in welcher die Markierungen entlang von zwei zueinander orthogonalen Richtungen (x, y) versetzt zueinander angeordnet sind, um eine Information zu codieren, wobei das Markierungsfeld (3) oder das Markierungsfeld (3) und dessen unmittelbare Umgebung auf eine vorbestimmte Temperatur erwärmt wird bzw. werden, insbesondere mittels optischer Strahlung und bevorzugt mit Hilfe eines aufgeweiteten Heizlaserstrahls (12).

4. Verfahren nach Anspruch 3, wobei die Leistung der Laserpulse so bemessen ist, dass die Markierungen bei einer ersten vorbestimmten Temperatur (T1) von mindestens 20 K oberhalb einer Transformationstemperatur (Tg) des Glases ausgebildet werden, und wobei das Markierungsfeld (3) oder das Markierungsfeld (3) und dessen unmittelbare Umgebung auf eine Temperatur (TH1; TH2) unterhalb der ersten vorbestimmten Temperatur (T1) erwärmt wird bzw. werden.

5. Verfahren nach Anspruch 3 oder 4, wobei die Markierungen bzw. das Markierungsfeld (3) während und/oder nach Ausführen der Markierungsschritte bis zum Erreichen einer zweiten vorbestimmten Temperatur (T2) unterhalb der Transformationstemperatur (Tg) des Glases kontrolliert abgekühlt werden bzw. wird, wobei die zweite vorbestimmte Temperatur (T2) zumindest 20K und bevorzugter zumindest 40K unterhalb der Transformationstemperatur des Glases liegt und/oder bei Unterschreiten der zweiten vorbestimmten Temperatur, bevorzugter bei Unterschreiten einer Temperatur von zumindest 50K unterhalb der Transformationstemperatur des Glases, eine weitere Abkühlung erfolgt, insbesondere eine unkontrollierte Abkühlung.

6. Verfahren nach einem der vorhergehenden Ansprüche, wobei zwischen zwei Markierungsschritten (PA11, PB11; PA11, PA21) zum Erzeugen von unmittelbar benachbarten Markierungen (A11, B11; A11, A21) zumindest ein Zeitraum von 0,01 sec Länge liegt, in welchem die Intensität des Schreiblaserstrahls (9) in oder auf dem Glas reduziert oder verschwindend ist.

7. Verfahren nach einem der vorhergehenden Ansprüche, wobei zumindest einige der diskreten Markierungen (A, B), die in dem Markierungsfeld (3) unmittelbar aneinander angrenzen, teilweise miteinander überlappend ausgebildet werden.

8. Verfahren nach Anspruch 7, wobei diejenigen diskreten Markierungen (A, B), die in dem Markierungsfeld (3) unmittelbar aneinander angrenzen, als kreisförmige Markierungen mit einem jeweils vorbestimmten Durchmesser und so ausgebildet werden, dass der jeweils vorbestimmte Durchmesser dieser unmittelbar aneinander angrenzenden Markierungen um bis zu 10%, bevorzugt um bis zu 20% größer ist als der Abstand zwischen diesen Markierungen.

9. Verfahren nach einem der vorhergehenden Ansprüche, wobei das Glas oder ein daraus ausgebildetes Glasprodukt im noch erwärmten Zustand geprüft wird und die Markierungen des Markierungsfeldes eines fehlerhaften Glases oder Glasprodukts durch Wärmebehandlung unlesbar oder ungültig gemacht werden.

10. Vorrichtung zum Markieren von Glas oder eines glasartigen Werkstoffs mittels einer Mehrzahl von diskreten Markierungen in oder auf dem Glas oder glasartigen Werkstoff (5), die gemeinsam ein Markierungsfeld (3) ausbilden, insbesondere zur Durchführung des Verfahrens nach einem der vorhergehenden Ansprüche, umfassend:
einen Schreiblaser (6) zum Erzeugen eines auf das Glas oder den Werkstoff abgebildeten Schreiblaserstrahls (9) und
ein Verstellmittel, um den Schreiblaserstrahl (9) und das Glas oder den Werkstoff (5) während des Ausbildens des Markierungsfeldes (3) relativ zueinander zu bewegen, wobei
das Verstellmittel ausgelegt ist, um den Schreiblaserstrahl und das Glas oder den Werkstoff so relativ zueinander zu bewegen, dass in oder auf dem Glas oder Werkstoff eine Mehrzahl von diskreten Markierungen ausgebildet wird, die gemeinsam das Markierungsfeld (3) ausbilden, und
eine Steuereinrichtung (15) vorgesehen ist, die so ausgelegt ist, dass in einer vorbestimmten Richtung (x, y) unmittelbar benachbarte Markierungen (A11, B11; A11, A21) in zwei Markierungsschritten (PA11, PA12; PA11, PA31) ausgebildet werden, die nicht unmittelbar nacheinander ausgeführt werden
**dadurch gekennzeichnet, dass** die Steuereinrichtung (15) ferner so ausgelegt ist, dass die jeweilige Folge von regelmäßig zueinander beabstandeten Markierungen durch zeilen- oder spaltenweise Relativbewegung zwischen dem Schreiblaserstrahl (9) und dem Glas oder glasartigen Werkstoff (5) entlang der vorbestimmten Richtung (x; y) oder durch Ausbildung der Markierungen in zufälliger Reihenfolge derart ausgebildet wird, dass eine Ausbildung von unmittelbar benachbarten Markierungen mittels zeitlich unmittelbar aufeinanderfolgend ausgeführter Markierungsschritte verhindert ist.

11. Vorrichtung nach Anspruch 10, wobei die Steuereinrichtung (15) ferner so ausgelegt ist, dass zwischen einem jeweiligen ersten Markierungsschritt (PA11) und einem jeweiligen zweiten Markierungsschritt (PB11; PA21) zum Ausbilden einer jeweiligen ersten und zweiten Markierung (A11, B11 A11, A21), die in der vorbestimmten Richtung (x; y) unmittelbar benachbart zueinander angeordnet sind, ein weiterer Markierungsschritt (PA12; PA31) zum Ausbilden einer weiteren Markierung (A12; A31) ausgeführt wird, die in der vorbestimmten Richtung nicht unmittelbar zu der ersten Markierung (A11) benachbart ist.

12. Vorrichtung nach Anspruch 10 oder 11, wobei der Schreiblaser (6) die Markierungen mittels kurzer Laserpulse ausbildet, wobei die Steuereinrichtung (15) ferner so ausgelegt ist, dass die Markierungen des Markierungsfeldes (3) eine zweidimensionale Matrix (1) ausbilden, in welcher die Markierungen entlang von zwei zueinander orthogonalen Richtungen (x, y) versetzt zueinander angeordnet sind, um eine Information zu codieren.

13. Vorrichtung nach Anspruch 12, wobei eine Heizeinrichtung das Markierungsfeld (3) oder das Markierungsfeld (3) und dessen unmittelbare Umgebung auf eine vorbestimmte Temperatur erwärmt.

14. Vorrichtung nach einem der Ansprüche 10 bis 13, wobei die Steuereinrichtung (15) ferner so ausgelegt ist, dass diejenigen diskreten Markierungen (A, B), die in dem Markierungsfeld (3) unmittelbar aneinander angrenzen, als kreisförmige Markierungen mit einem jeweils vorbestimmten Durchmesser und so ausgebildet werden, dass der jeweils vorbestimmte Durchmesser dieser unmittelbar aneinander angrenzenden Markierungen um bis zu 10%, bevorzugt um bis zu 20% größer ist als der Abstand zwischen diesen Markierungen.

15. Vorrichtung nach einem der Ansprüche 10 bis 14, weiterhin umfassend eine Prüfund Bearbeitungseinrichtung, um das Glas oder ein daraus ausgebildetes Glasprodukt im noch erwärmten Zustand zu prüfen und um die Markierungen des Markierungsfeldes eines fehlerhaften Glases oder Glasprodukts durch Wärmebehandlung unlesbar oder ungültig zu machen.

## Claims

1. A method for marking of glass or a glass-like material, in which a writing laser beam (9) and the glass or glass-like material (5) are moved relative to each other for forming an array of marks (3) in or on the glass or glass-like material consisting of a plurality of discrete marks (A, B) formed in discrete marking steps and distributed along at least one direction (x, y), wherein
marks (A11, B11; A11, A21), which are directly adjacent to each other in a predetermined direction (x, y), are formed in two marking steps (PA11, PA12; PA11, PA31) that are not carried out directly in succession one after the other and
the marking steps form at least two series of marks in the predetermined direction (x; y), which are spaced apart from each other in regular intervals and interleaved in the predetermined direction,
**characterized in that** the respective series of regularly spaced marks is formed by a row-wise or column-wise relative movement between the writing laser beam (9) and the glass or glass-like material (5) along the predetermined direction (x; y) or by the formation of the marks in a random sequence such that the formation of directly adjacent marks by means of marking steps, which are performed directly in succession one after the other, is prevented.

2. The method of claim 1, wherein a further step of marking (PA12; PA31) for forming a further mark (A12; A31), which is not directly adjacent to the first mark (A11) in the predetermined direction, is performed between a respective first marking step (PA11) and a respective second marking step (PB11; PA21) for forming a respective first and second mark (A11, B11; A11, A21), which are disposed directly adjacent to each other in the predetermined direction (x; y).

3. The method according to any of the preceding claims, wherein the marks are formed by means of short laser pulses, wherein the marks of the array of marks (3) form a two-dimensional matrix (1), in which the marks are disposed along two mutually orthogonal directions (x, y) and spaced apart to each other, for encoding an information, wherein the array of marks (3) or the array of marks (3) together with its immediate vicinity is heated to a predetermined temperature, in particular by means of optical radiation and preferably by means of an expanded heating laser beam (12).

4. The method of claim 3, wherein the power of the laser pulses is such that the marks are formed at a first predetermined temperature (T1) of at least 20 K above the transformation temperature (Tg) of the glass and wherein the array of marks (3) or the array of marks (3) together with its immediate vicinity are heated to a temperature (TH1; TH2) below the first predetermined temperature (T1).

5. The method according to claim 3 or 4, wherein the marks or the array of marks (3) are cooled in a controlled manner during and/or after performing the marking steps until attaining a second predetermined temperature (T2) below the transformation temperature (Tg) of the glass, wherein the second predetermined temperature (T2) is at least 20K and preferably at least 40K below the transformation temperature of the glass and/or a further cooling step is performed, if the temperature falls below the second predetermined temperature, more preferably if the temperature falls below a temperature of at least 50K below the transformation temperature of the glass.

6. The method according to any of the preceding claims, wherein at least a period of 0.01 sec length exists between two marking steps (PA11, PB11; PA11, PA21) for generating directly adjacent marks (A11, B11; A11, A21), in which the intensity of the writing laser beam (9) in or on the glass is reduced or vanishing.

7. The method according to any of the preceding claims, wherein at least some of said discrete marks (A, B), which are directly adjacent to each other in the array of marks (3), partially overlap with each other.

8. The method according to claim 7, wherein those discrete marks (A, B), which are directly adjacent to each other in the array of marks (3), are formed as circular marks, each with a predetermined diameter and such that the respective predetermined diameter of said directly adjacent marks is larger by up to 10%, preferably by up to 20%, than the distance between these marks.

9. The method according to any of the preceding claims, wherein the glass or a glass product formed therefrom is tested still in a heated state, and the marks of the array of marks of a defective glass or glass product are made illegible or invalid by heat treatment.

10. An apparatus for marking of glass or a glass-like material by means of a plurality of discrete marks in or on the glass or glass-like material (5), which together form an array of marks (3), in particular for performing the method according to any of the preceding claims, comprising:
a writing laser (6) for generating a writing laser beam (9) imaged on the glass or the material and
an adjusting means for moving the writing laser beam (9) and the glass or the material (5) relative to each other during the formation of the array of marks (3), wherein
the adjusting means is configured for moving the writing laser beam and the glass or the material relative to each other such that a plurality of discrete marks is formed in or on the glass or material, which together form the array of marks (3), and
a controlling means is provided (15), which is configured such that marks (A11, B11; A11, A21), which are directly adjacent to each other in a predetermined direction (x, y), are formed in two marking steps (PA11, PA12; PA11, PA31) that are not carried out directly in succession one after the other,
**characterized in that** the controlling means (15) is further configured such that the respective series of regularly spaced marks is formed by a row-wise or column-wise relative movement between the writing laser beam (9) and the glass or glass-like material (5) along the predetermined direction (x; y) or by the formation of the marks in a random sequence such that a formation of directly adjacent marks by means of marking steps, which are performed directly in succession one after the other, is prevented.

11. The apparatus according to claim 10, wherein said controlling means (15) is further configured such that a further step of marking (PA12; PA31) for forming a further mark (A12; A31), which is not directly adjacent to the first mark (A11) in the predetermined direction, is performed between a respective first marking step (PA11) and a respective second marking step (PB11; PA21) for forming a respective first and second mark (A11, B11; A11, A21), which are disposed directly adjacent to each other in the predetermined direction (x; y).

12. The apparatus according to claim 10 or 11, wherein the writing laser (6) forms the marks by means of short laser pulses, wherein said controlling means (15) is further configured such that the marks of the array of marks (3) form a two-dimensional matrix (1), in which the marks are disposed along two mutually orthogonal directions (x, y) and offset to each other for encoding information.

13. The apparatus according to claim 12, wherein a heating device heats the array of marks (3) or the array of marks (3) and its immediate vicinity to a predetermined temperature.

14. The apparatus according to any of claims 10 to 13, wherein said controlling means (15) is further configured such that those discrete marks (A, B), which are directly adjacent to each other in the array of marks (3), are formed as circular marks, each with a predetermined diameter and such that the respective predetermined diameter of said directly adjacent marks is larger by up to 10%, preferably by up to 20%, than the distance between these marks.

15. The apparatus according to any of claims 10 to 14, further comprising a testing and processing means for checking the glass or a resulting glass product formed therefrom still in a heated state and for making the marks on the array of marks of a defective glass or glass product illegible or invalid by heat treatment.

## Revendications

1. Un procédé de marquage de verre ou de matériau de type verre, dans lequel un rayon laser de marquage (9) et le verre ou le matériau de type verre (5) sont déplacement relativement l'une par rapport à l'autre pour la formation d'une zone de marques (3) dans ou sur le verre ou le matériau de type verre, consistant en une pluralité de marques discrètes (A, B) formées à la suite d'étapes de marquage discrètes et distribuée le long d'au moins une direction (x, y), dans lequel
les marques (A11, B11 ; A11, A21), qui sont directement adjacentes les unes aux autres suivant une direction prédéterminée (x, y) sont formées en deux étapes de marquage (PA11, PA12 ; PA11, PA31) qui ne sont pas exécutées directement en séquence l'une à la suite de l'autre et
les étapes de marquage forment au moins deux séries de marques suivant la direction prédéterminée (x ; y), espacées l'une de l'autre d'intervalles régulier et entrelacées suivant la direction prédéterminée,
**caractérisée en ce que** les séries respectives de marques régulièrement espacées sont formées par un mouvement relatif suivant une colonne ou une rangée entre le rayon laser de marquage (9) et le verre ou le matériau de type verre (5) le long de la direction prédéterminée (x ; y) ou par la formation de marques suivant une séquence aléatoire de telle manière que la formation de marques directement adjacentes par les étapes de marquage, qui sont effectuées directement en séquence l'une à la suite de l'autre, puisse être évitées.

2. Le procédé de la revendication 1, dans lequel une étape supplémentaire de marquage (PA12 ; PA31) pour la formation d'une marque supplémentaire (A12 ; A31) non directement adjacente à la première marque (PA11) suivant la direction prédéterminée, est effectuée entre une première étape de marquage respective (PA11) et une seconde étape de marquage respective (PB11 ; PA21) pour la formation respectivement d'une première et d'une seconde marques (A11, B11 ; A11, A21), qui sont disposés directement adjacentes l'une à l'autre suivant la direction prédéterminée.

3. Le procédé selon l'une quelconque des revendications précédentes, dans lequel les marques sont formées au moyens de brefs pulses laser, dans lequel les marques de la zone de marques (3) forment une matrice bi-dimensionnelle (1), dans laquelle les marques sont disposées le long de deux directions mutuellement orthogonales (x, y) et à distance l'une de l'autre, pour l'encodage d'une information, dans lequel la zone de marques (3) ou la zone de marques (3) avec son voisinage immédiat est chauffé à une température prédéterminée, en particulier au moyen d'une radiation optique et de préférence au moyen d'un rayon laser chauffant à expansion (12).

4. Le procédé selon la revendication 3, dans lequel la puissance des pulses laser est telle que les marques sont formées à une première température déterminée (T1) égale à au moins 20K au-dessus de la température de transformation (Tg) du verre et dans lequel la zone de marques (3) ou la zone de marques (3) avec son voisinage immédiat est chauffée à une température (TH1 ; TH2) inférieure à la première température déterminée (T1).

5. Le procédé selon la revendication 3 ou 4, dans lequel les marques ou la zone de marques (3) est/sont refroidie(s) d'une manière contrôlée durant et/ou à la suite de l'exécution des étapes de marquage jusqu'à l'obtention d'une seconde température prédéterminée (T2) inférieure à la température de transformation (Tg) du verre, dans lequel la seconde température prédéterminée (T2) est au moins 20K et de préférence au moins 40 K sous la température de transformation du verre et/ou une étape supplémentaire de refroidissement est effectuée, lorsque la température chute en dessous de la seconde température prédéterminée, et plus préférentiellement lorsque la température chute en deçà d'une température égale à au moins 50K sous la température de transformation du verre.

6. Le procédé selon l'une quelconque des revendication précédentes, dans lequel au moins une durée d'au moins 0.01 seconde existe entre deux étapes de marquage (PA11, PB11 ; PA11, PA21) pour la génération de marques directement adjacentes (A11, B11 ; A11, A21), dans lequel l'intensité au sein du verre du rayon laser de marquage (9) est réduite voire supprimée.

7. Le procédé selon l'une quelconque des revendications précédentes, dans lequel au moins certaines desdites marques discrètes (A, B), qui sont directement adjacentes les unes par rapport aux autres au sein de la zone de marques (3), se superposent partiellement les unes par rapport aux autres.

8. Le procédé selon la revendication 7, dans lequel ces marques discrètes (A, B), qui sont directement adjacentes les unes par rapport aux autres au sein de la zone de marques (3), sont formées en marques circulaires, chacune ayant un diamètre prédéterminé tel que le diamètre prédéterminé respective desdites marques directement adjacentes est plus important d'au moins 10%, et de préférence jusqu'à 20% que la distance entre ces marques.

9. Le procédé selon l'une quelconque des revendications précédentes, dans lequel le verre ou un produit en verre formé par ce procédé est testé jusqu'à un état de chauffage, et les marques de la zone de marques d'un verre défectueux ou d'un produit en verre sont rendues illisibles ou invalides par traitement thermique.

10. Un dispositif de marquage de verre ou de matériau de type verre au moyen d'une pluralité de marques discrètes dans ou sur le verre ou le matériau de type verre (5), formant ensemble une zone de marques (3), notamment pour effectuer le procédé selon l'une quelconque des revendications précédentes, ledit appareil comprenant :
un laser de marquage (6) pour la génération d'un rayon laser de marquage (9) imagée sur le verre ou le matériau et
des moyens d'ajustement pour le déplacement du rayon laser de marquage (9) et le verre ou le matériau (5) relativement l'un à l'autre durant la formation de la zone de marques (3), dans lequel
les moyens d'ajustement sont configurés pour le déplacement du rayons laser de marquage et le verre ou le matériau, relativement l'un à l'autre, de telle manière qu'une pluralité de marques discrètes est formée au sein ou sur le verre ou le matériau, formant ensemble la zone de marques (3), et
des moyens de commande sont mis à disposition (15), configurés pour que les marques (A11, B11 ; A11, A21), qui sont directement adjacentes les unes par rapport aux autres suivant une direction prédéterminée (x, y), sont formées suivant deux étapes de marquage (PA11, PA12; PA11, PA31) qui ne sont pas effectivement directement l'une après l'autre,
**caractérisé en ce que** les moyens de commande (15) sont configurés en outre de manière que les séries respectives de marques régulièrement espacées sont formées par un mouvement relatif suivant une colonne ou une rangée entre le rayon laser de marquage (9) et le verre ou le matériau de type verre (5) le long de la direction prédéterminée (x ; y) ou par la formation de marques suivant une séquence aléatoire de telle manière que la formation de marques directement adjacentes par les étapes de marquage, qui sont effectuées directement en séquence l'une à la suite de l'autre, puisse être évitées.

11. Le dispositif selon la revendication 10, dans lequel lesdits moyens de commande (15) sont configuré en outre de manière à ce qu'une étape supplémentaire de marquage (PA12 ; PA31) pour la formation d'une marque supplémentaire (A12 ; A31) non directement adjacente à la première marque (PA11) suivant la direction prédéterminée, est effectuée entre une première étape de marquage respective (PA11) et une seconde étape de marquage respective (PB11 ; PA21) pour la formation respectivement d'une première et d'une seconde marques (A11, B11 ; A11, A21), qui sont disposés directement adjacentes l'une à l'autre suivant la direction prédéterminée.

12. Le dispositif selon la revendication 10 ou 11, dans lequel le laser de marquage (6) forme les marques au moyens de brefs pulses laser, dans lequel les moyens de commande (15) sont configurés en outre pour que les marques de la zone de marques (3) forment une matrice bi-dimensionnelle (1), dans laquelle les marques sont disposées le long de deux directions mutuellement orthogonales (x, y) et à distance l'une de l'autre, et décalées l'une par rapport à l'autre pour l'encodage d'une information.

13. Le dispositif selon la revendication 12, dans lequel un dispositif de chauffage chauffe la zone de marques (3) ou la zone de marques avec son voisinage immédiat à une température prédéterminée.

14. Le dispositif selon l'une quelconque des revendications 10 à 13, dans lequel lesdits moyens de commande (15) sont configurés de telle manière que les marques discrètes (A, B), qui sont directement adjacentes les unes par rapport aux autres au sein de la zone de marques (3), sont formées en marques circulaires, chacune ayant un diamètre prédéterminé tel que le diamètre prédéterminé respective desdites marques directement adjacentes est plus important d'au moins 10%, et de préférence jusqu'à 20% que la distance entre ces marques.

15. Le dispositif selon l'une quelconque des revendications 10 à 14, comprenant en outre des moyens de test et de traitement pour la vérification du verre ou d'un produit en verre en résultant jusqu'à un état de chauffage pour rendre grâce à un traitement thermique illisibles ou invalides les marques sur la zone de marques d'un verre ou d'un produit en verre défectueux .
